# EUROPÄISCHE PATENTSCHRIFT

(11) **EP 3 701 156 B1**
(45) Veröffentlichungstag und Bekanntmachung des Hinweises auf die Patenterteilung: **11.08.2021**
(21) Anmeldenummer: 18729019.2
(22) Anmeldetag: 05.05.2018
(51) Int. Cl.: F16B 23/00

(54) **SCHRAUBE**
SCREW
VIS

(30) Priorität: 28.10.2017 DE 202017005611 U
(43) Veröffentlichungstag der Anmeldung: 02.09.2020
(73) Patentinhaber: Naeemi Valipour, Mohammad Ali, 90455 Nürnberg (DE)
(72) Erfinder: Naeemi Valipour, Mohammad Ali, 90455 Nürnberg (DE)
(86) Internationale Anmeldenummer: PCT/DE2018/000128
(87) Internationale Veröffentlichungsnummer: WO 2018/219372

(56) Entgegenhaltungen:
- WO-A1-03/072309
- WO-A1-2015/027704
- AU-A1- 2004 202 564
- DE-U1- 20 117 387
- KR-U- 19980 030 268

## Beschreibung

### Gebiet der Erfindung

Die Erfindung betrifft eine Schraube, die mit unterschiedlichen Schraubendrehern bzw. Bits ein- und ausgeschraubt werden kann.

### Stand der Technik

Aus der DE 20 2007 016 004 U1 sind Schrauben mit unterschiedlichen Schraubenköpfen bekannt, beispielsweise mit Schlitz, Kreuzschlitz, Torx oder Inbus. Um diese Schrauben in ein Werkstück hineinschrauben oder aus diesem herausschrauben zu können, werden vier verschiedene Schraubendreher bzw. Bits benötigt, die in die verschiedenen Schraubenköpfe passen.

Es sind bereits Schrauben bekannt, die mit unterschiedlichen Schraubendrehern bzw. Bits ein- und ausgeschraubt werden können, beispielsweise aus DE20117387U1, WO03/072309A1 und AU2004202564A1.

### Aufgabe der Erfindung

Ausgehend von diesem Stand der Technik liegt der Erfindung die Aufgabe zugrunde, eine verbesserte Schraube mit einem derartig gestalteten Schraubenkopf zu schaffen, mit dem die Schraube mit den bekannten Schraubendrehern bzw. Bits, nämlich Schlitz, Einweg-Schlitz, Kreuzschlitz (Phillips), Torx, Innen-Vierkant (Robertson), Innen-Sechskant (Inbus), Torq-Set, Frozidriv oder Spanner, ein- und ausgedreht werden kann.

### Lösung der Aufgabe

Diese Aufgabe wird durch eine Schraube mit den Merkmalen des Kennzeichens des Anspruchs 1 gelöst.

Eine weitere vorteilhafte Ausgestaltung der Erfindung ist in dem Unteranspruch angegeben.

### Vorteile der Erfindung

Die mit der Erfindung erzielten Vorteile bestehen insbesondere darin, dass die Schraube mit den meisten der genormten Schraubendreher bzw. Bits hinein- und herausgedreht werden kann. Ein weiterer Vorteil besteht in der hohen Antriebskraft an den Berührungsflächen zwischen der Schraube und jedem dieser Schraubendreher bzw. Bits, sogar bei Verwendung kleinerer Größen von Schraubendrehern bzw. Bits.

### Beschreibung der Erfindung

Ein Ausführungsbeispiel der Erfindung ist in der Zeichnung dargestellt und wird nachfolgend ausführlich beschrieben.

Es zeigen
- Fig. 1: eine Ansicht von oben auf einen Schraubenkopf nach der Erfindung,
- Fig. 2: eine perspektivische Schnittzeichnung des Schraubenkopfes in vergrößertem Maßstab,
- Fig. 3: eine perspektivische Ansicht eines Viertels des Negativabdrucks des Schraubenkopfes,
- Fig. 4: eine perspektivische Ansicht des daneben liegenden Viertels des Negativabdrucks des Schraubenkopfes
- Fig. 5: eine perspektivische Ansicht der einen Hälfte des Negativabdrucks des Schraubenkopfes und
- Fig. 6: eine perspektivische Ansicht des vollständigen Negativabdrucks des Schraubenkopfes.

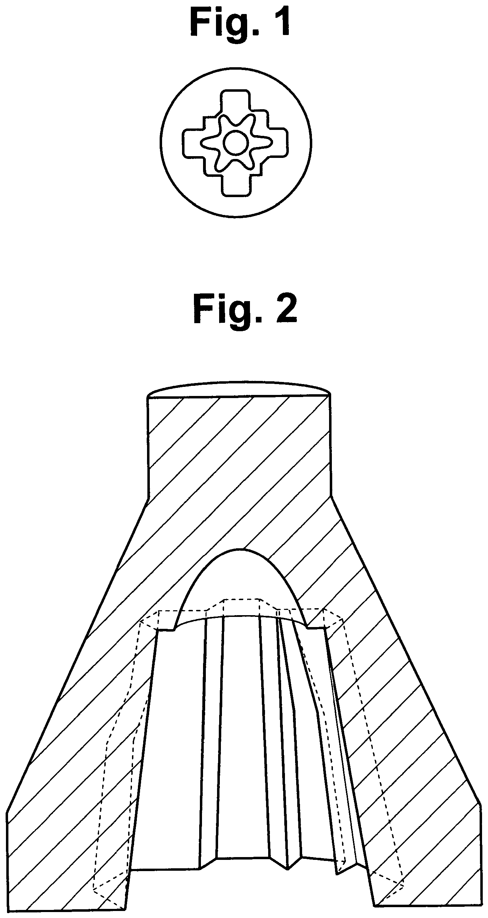

Die Fig. 1 zeigt eine Ansicht von oben auf einen Schraubenkopf gemäß der Erfindung, der in der Fig. 2 als perspektivischer Schnitt in vergrößertem Maßstab dargestellt ist.

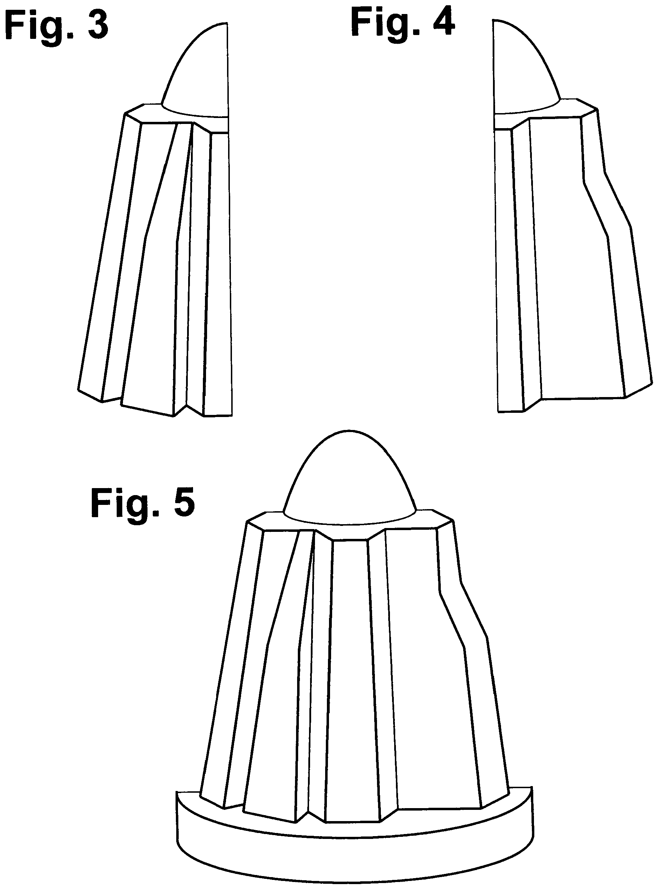

Die Figuren 3 bis 5 zeigen jeweils zwei verschiedene Viertel und eine Hälfte des Schraubenkopfes, und zwar als Negativabdruck, den man erhält, wenn der Schraubenkopf mit einer aushärtbaren Gießmasse randvoll gefüllt und diese nach dem Aushärten herausgenommen wird. Auf diese Weise ist der Verlauf der verschiedenen Flächen besser zu erkennen, insbesondere, wenn dieser Negativabdruck halbiert und gevierteilt wird. Die Figuren 3 und 4 zeigen jeweils zwei nebeneinander liegende Viertel, die in der Fig.5 als eine der beiden gleichen Hälften dargestellt sind. Die jeweils diagonal gegenüberliegenden Viertel sind identisch zueinander.

Beim Betrachten der Figuren ist deutlich zu erkennen, dass der Schraubenkopf derart ausgestaltet ist, dass für Schraubendreher mit den meisten Bits, nämlich mit Schlitz, Einweg-Schlitz, Kreuzschlitz (Phillips), Torx, Innen-Vierkant (Robertson), Innen-Sechskant (Inbus), Torq-Set, Prozidriv oder Spanner, zum Übertragen des Drehmoments von dem Schraubendreher bzw. Bit auf den Schraubenkopf passende Berührungsflächen vorhanden sind.

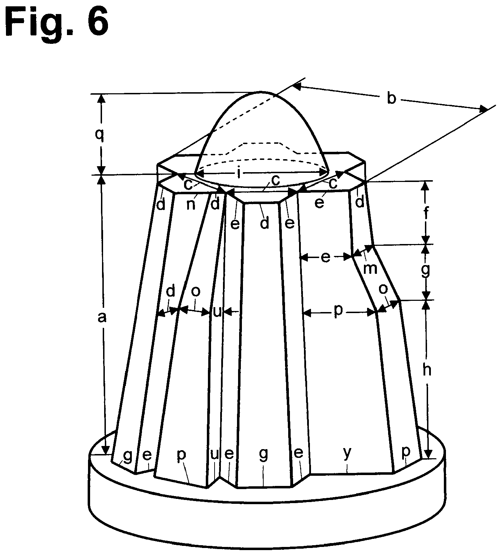

In der Fig. 6 sind Buchstaben angegeben, die sich auf Maßangaben beziehen, deren Verhältnisse zueinander für alle genormten Schraubengrößen gleich sind, und zwar wie folgt:
b = 0,813 a,
c = 0,250 a,
d = 0,125 a,
e = 0,188 a,
f = 0,238 a,
g = 0,200 a,
h = 0,563 a,
i = 0,475 a,
m = 0,150 a,
n = 0,163 a,
o = 0,175 a,
p = 0,263 a,
q = 0,288 a,
u = 0,213 a,
y = 0,338 a.

Eine weitere Besonderheit besteht darin, dass in einen Schraubenkopf einer bestimmten Normgröße auch Schraubendreher bzw. Bits mit der nächst kleineren Normgröße, passen, wie in den nachstehenden Tabellen für Schrauben der Größen T 40 und T 25 angegeben ist.

| **Für eine Schraube der Größe T 40 passen folgende Schraubendreher mit kleineren Größen** | | | |
|---|---|---|---|
| Torx | T 35 | T 30 | T 27 |
| Kreuzschlitz (Phillips) | PH 4 | PH 3 | PH 2 |
| Pozidriv | PZ 3 | PZ 2 | |
| Innen-Sechskant (Inbus) | H 5 | | |
| Innen-Vierkant (Robertson) | S 4 | S 3 | |
| Schlitz | 1,2 x 7 | 1 x 6,5 | 1 x 6 |
| Torq-Set | 10 | 8 | |
| Einweg-Schlitz | C 3 | C 2 | |

| **Für eine Schraube der Größe T 26 passen folgende Schraubendreher mit kleüneren Größen** | | | | |
|---|---|---|---|---|
| Torx | T 20 | T 15 | AZ 25 | |
| Kreuzschlitz (Phillips) | PH 3 | PH 2 | PH 1 | |
| Pozidriv | PZ 2 | PZ 1 | | |
| Innen-Sechskant (Inbus) | V 1,8 | S 3 | K 3 | |
| Innen-Vierkant (Robertson) | R 3 | S 1 | | |
| Schlitz | 5,5 | 5 | 4,5 | 4 |
| Torq-Set | 8 | 7 | 6 | |
| Einweg-Schlitz | C 1 | | | |

## Patentansprüche

1. Schraube für unterschiedliche Schraubendreher bzw. Bits, wobei der Schraubenkopf derart ausgestaltet ist, dass für Schraubendreher bzw. Bits mit Schlitz, Einweg-Schlitz, Kreuzschlitz, Torx, Innen-Vierkant, Innen-Sechskant, Torq-Set, Prozidriv oder Spanner zum Übertragen des Drehmoments von dem Schraubendreher bzw. Bit auf den Schraubenkopf passende Berührungsflächen vorhanden sind, **dadurch gekennzeichnet, dass** die Berührungsflächen die Maße a bis y gemäß Fig.6 aufweisen, wobei nach Fig.6 die Verhältnisse der Maße b bis y der Berührungsflächen des Schraubenkopfes einerseits zu dem Maß der Höhe a des Schraubenkopfes andererseits für genormte Schraubengrößen jeweils gleich sind, und zwar wie folgt:
b = 0,813 a,
c = 0,250 a,
d = 0,125 a,
e = 0,188 a,
f = 0,238 a,
g = 0,200 a,
h = 0,563 a,
i = 0,475 a,
m = 0,150 a,
n = 0,163 a,
o = 0,175 a,
p = 0,263 a,
q = 0,288 a,
u = 0,213 a,
y = 0,338 a.

2. Schraube nach Anspruch 1, **dadurch gekennzeichnet, dass** in einen Schraubenkopf einer bestimmten Normgröße auch Schraubendreher bzw. Bits mit der nächst kleineren Normgröße hineinpassen.

## Claims

1. Screw for different screwdrivers or bits, whereby the screw head is designed in such a way as to provide suitable contact surfaces for slotted, one-way, cross, Torx, Robertson, Hex socket, Torq-set, Pozidriv or spanner (pig nose) screwdrivers or bits to transfer the torque from the screwdriver or bit to the screw head. Screw is **characterised by** the contact surfaces having dimensions a to y as illustrated in Fig.6, whereby in Fig. 6, the dimensions b to y of the screw head contact surfaces are in the same proportions to the height dimension a of the screw head on the one hand, and on other, for standardised screw sizes, as follows:

2. Screw according to claim 1, **characterised in that** screwdrivers or bits with the next smaller standard size will also fit into a screw head of a specific standard size.

## Revendications

1. Vis pour différents tournevis ou embouts, la tête de vis étant conçue de sorte qu'elle présente des surfaces de contact adaptées à des tournevis ou embouts à fente, de sécurité, cruciforme, Torx, à empreinte carrée, à six-pans creux, Torq-Set ou Pozidriv, ou à des clés de serrage pour transmettre le couple produit par le tournevis ou l'embout à la tête de vis, **caractérisée en ce que** les surfaces de contact présentent les cotes a à y selon la fig. 6, les rapports des cotes b à y des surfaces de contact de la tête de vis étant, selon la fig. 6, identiques, d'une part, à la cote de la hauteur a de la tête de vis et, d'autre part, pour les différentes tailles de vis normalisées, et ce, comme suit :

2. Vis selon la revendication 1, **caractérisée en ce que** des tournevis ou embouts d'une taille normalisée immédiatement inférieure rentrent également dans une tête de vis d'une certaine taille normalisée.
